# EUROPÄISCHE PATENTSCHRIFT

(11) **EP 2 704 295 B1**
(45) Veröffentlichungstag und Bekanntmachung des Hinweises auf die Patenterteilung: **29.11.2017**
(21) Anmeldenummer: 12182295.1
(22) Anmeldetag: 30.08.2012
(51) Int. Cl.: H02K 21/14, H02K 3/26, A61C 1/05, A61C 1/06

(54) **Medizinische, insbesondere dentale, Vorrichtung mit einem elektromechanischen Wandler**
Medical, in particular dental device with an electromechanic transducer
Dispositif médical, en particulier dentaire, avec un convertisseur électromécanique

(43) Veröffentlichungstag der Anmeldung: 05.03.2014
(73) Patentinhaber: W & H Dentalwerk Bürmoos GmbH, 5111 Bürmoos (AT)
(72) Erfinder: Schmitzberger, Thomas, 5122 Hochburg-Ach (AT); Schmiedlechner, Karl, 5121 Ostermiething (AT); Hofbauer, Manfred, 5110 Oberndorf (AT)
(74) Vertreter: Benda, Ralf

(56) Entgegenhaltungen:
- EP-A1- 1 982 668
- WO-A1-93/05712
- DE-A1- 1 613 380
- US-A- 4 645 961
- US-A- 4 665 331
- US-A1- 2008 261 172

## Beschreibung

Die vorliegende Erfindung betrifft eine medizinische, insbesondere dentale, Vorrichtung mit einem elektromechanischen Wandler, der einen Stator mit mehreren elektrisch leitenden Spulenwicklungen und einen bewegbar zum Stator ausgebildeten Rotor umfasst.

Aus der Patentanmeldung US 2008/0261172 A1 ist eine medizinische, insbesondere dentale, Vorrichtung mit einem elektromechanischen Wandler in Form eines Generators bekannt. Aus der Patentanmeldung 2005/0162028 A1 ist eine medizinische, insbesondere dentale, Vorrichtung mit einem Elektromotor bekannt.

Die Patentschrift US 4,665,331 offenbart eine medizinische, insbesondere dentale, Vorrichtung mit einem Motor, dessen Stator mehrere flexible, ineinander angeordnete Leiterplatten mit Spulenwicklungen aufweist.

Die Patentanmeldung WO 93/05712 A1 offenbart einen Katheder mit einer Ultraschallquelle und einem akustischen Spiegel, der mit einem Motor verstellbar ist, wobei der Motor eine zylindrische Leiterplatte mit Spulenwicklungen aufweist.

Der vorliegenden Erfindung liegt die Aufgabe zugrunde einen elektromechanischen Wandler für eine medizinische, insbesondere dentale, Vorrichtung zu schaffen, dessen Außenabmessungen möglichst klein sind, so dass der Wandler besser in eine medizinische, insbesondere dentale, Vorrichtung, vorzugsweise in ein Handstück oder ein mit einem Handstück verbindbares Anschlussteil, integrierbar ist. Des Weiteren soll auch die Herstellung des elektromechanischen Wandlers vereinfacht und / oder kostengünstiger werden.

Diese Aufgabe wird durch eine medizinische, insbesondere dentale, Vorrichtung gemäß Anspruch 1 gelöst. Bevorzugte Ausführungsformen sind in den abhängigen Ansprüchen definiert. Durch das Vorsehen aller Spulenwicklungen des Stators auf einer einzigen Leiterplatte werden in vorteilhafter Weise die Abmessungen des Stators, insbesondere dessen Durchmesser, und somit des gesamten elektromechanischen Wandlers verringert, so dass der elektromechanische Wandler einfacher in eine medizinische, insbesondere dentale, Vorrichtung integrierbar ist. Des Weiteren ist der Stator oder der elektromechanische Wandler einfacher und kostengünstiger herstellbar, da zum Beispiel die Spulenwicklungen nicht gewickelt werden müssen oder bei der Montage kein Verlöten der Spulenwicklungen notwendig ist. Des Weiteren wird durch das Vorsehen der flexiblen Leiterplatte der Luftspalt verringert und der Füllfaktor erhöht, so dass der elektromechanische Wandler zum Beispiel eine höhere Leistung erzeugen kann.

Der Begriff medizinische, insbesondere dentale, Vorrichtung umfasst vorzugsweise gerade Handgriffe oder Handstücke, gebogene Handgriffe oder Handstücke, die im Dentalbereich oftmals als Winkelstücke bezeichnet werden, als auch Teile von Handgriffen. Derartige Teile werden zum Beispiel durch einen Griffabschnitt eines Handgriffs gebildet, der zum Beispiel mit verschiedenen Kopfabschnitten für unterschiedliche Werkzeuge oder mit Getrieben für unterschiedliche Über- oder Untersetzungen verbindbar ist. Der Begriff medizinische, insbesondere dentale, Vorrichtung umfasst zum Beispiel auch Zwischenstücke, Kupplungen, Adapter, Antriebseinheiten, insbesondere Motoreinheiten, oder Hülsenabschnitte, die lösbar mit einem Behandlungsinstrument und / oder einem Handgriff oder Handstück verbindbar sind.

Der Rotor umfasst vorzugsweise ein zwei- oder mehrpoliges Magnetelement. Der Stator umfasst neben der flexiblen Leiterplatte mit der zumindest einen Spulenwicklung vorzugsweise zumindest ein magnetisches Rückschlusselement, zum Beispiel in Form eines Blechpakets oder von Eisenblechen.

Gemäß einem Ausführungsbeispiel ist die flexible Leiterplatte derart gebogen, insbesondere in Form eines im Wesentlichen zylindrischen Hohlkörpers, dass sie einen Hohlraum bildet. Der zylindrische Hohlkörper weist insbesondere einen im Wesentlichen zylindrischen Mantel auf. Der zylindrische Hohlkörper ist insbesondere im Wesentlichen rohrförmig oder rohrstutzenförmig ausgebildet und weist an zumindest einem Ende eine Öffnung auf. Vorzugsweise ist die flexible Leiterplatte derart gebogen oder eingerollt, dass mehrere Spulenwicklungen schichtweise übereinander angeordnet sind. Besonders bevorzugt ist zumindest ein Teil des Rotors, insbesondere dessen Magnetelement, in dem durch die gebogene flexible Leiterplatte gebildeten Hohlraum aufgenommen. Insbesondere ragt ein Teil des Rotors oder ein mit dem Rotor verbundenes Bauteil, zum Beispiel eine Rotorwelle oder ein Lager für den Rotor, durch die Öffnung an zumindest einem Ende des zylindrischen Hohlkörpers. Damit ist in vorteilhafter Weise eine besonders kompakte Struktur sowie ein besonders hoher Wirkungsgrad des Stators und des gesamten elektromechanischen Wandlers erzielbar.

Gemäß einem Ausführungsbeispiel bildet die zumindest eine Spulenwicklung eine Flachspule, welche insbesondere eine flächige Oberseite und eine flächige Unterseite hat. Vorzugsweise ist die flexible Leiterplatte flächig mit einer Oberseite und einer Unterseite ausgebildet, wobei jeweils zumindest eine Spulenwicklung oder Flachspule an der Oberseite und an der Unterseite vorgesehen ist. Besonders bevorzugt ist die Flachspule mit ihrer flächigen Ober- oder Unterseite an der Ober- oder Unterseite der flexiblen Leiterplatte angeordnet und / oder es sind die flächige Ober- oder Unterseite der flexiblen Leiterplatte und die Ober- oder Unterseite der flexiblen Leiterplatte im Wesentlichen parallel zueinander angeordnet. Insbesondere ist die flexible Leiterplatte als länglicher Streifen ausgebildet, auf dem mehrere Spulenwicklungen, vorzugsweise in einer Reihe, angeordnet sind. Durch diese Maßnahmen kann die Abmessung, insbesondere der Durchmesser, des Stators des elektromechanischen Wandlers erheblich reduziert werden. Wenn die Flachspule in dem elektromechanischen Wandler verbaut ist, dann ist sie vorzugsweise als eine um die Rotationsachse des Rotors gebogene Flachspule ausgebildet.

Gemäß einem Ausführungsbeispiel ist die zumindest eine Spulenwicklung, insbesondere die Flachspule, vollständig in der flexiblen Leiterplatte eingeschlossen oder durch eine an der flexiblen Leiterplatte vorgesehene oder daran angrenzende Deckschicht bedeckt. Die Spulenwicklung ist damit in vorteilhafter Weise elektrisch isoliert und / oder vor dem Einfluss äußerer Faktoren geschützt, die zum Beispiel korrosiv auf die Spulenwicklung einwirken. Ist die zumindest eine Spulenwicklung vollständig in der flexiblen Leiterplatte eingeschlossen, dann weist die flexible Leiterplatte mehrere Schichten auf, insbesondere eine Trägerschicht, auf welcher die Spulenwicklung aufgebracht oder angeordnet ist, und zumindest eine auf der Trägerschicht und / oder der Spulenwicklung aufgebrachte Schutzschicht. Die Schutzschicht oder die Deckschicht umfasst vorzugsweise ein elektrisch isolierendes Material. Die Schutzschicht oder die Deckschicht umfasst zum Beispiel einen Kunststoff oder Kunstharz, einen Lack, eine Folie oder einer Spritzgusskomponente, zum Beispiel Polyimid und / oder Epoxidharz. Die Schutzschicht oder die Deckschicht kann eine oder mehrere Schichten gleichen oder unterschiedlichen Materials umfassen. Die Schutzschicht oder die Deckschicht ist insbesondere biegsam oder flexibel ausgebildet, so dass sie mit der flexiblen Leiterplatte biegbar ist.

Die flexible Leiterplatte umfasst zum Beispiel eine Trägerschicht, die vorzugsweise einen elektrisch isolierenden Basiskörper bildet, die einseitig oder beidseitig mit elektrisch leitenden, metallischen Leiterbahnen, vorzugsweise aus Kupfer, Aluminium, Nickel oder einer Legierung, beschichtet ist. Die elektrisch leitenden, metallischen Leiterbahnen bilden die zumindest eine Spulenwicklung, insbesondere die Flachspule, und gegebenenfalls die elektrischen Verbindungen zwischen den mehreren Spulenwicklungen. Die Trägerschicht ist durch ein flexibles Trägermaterial gefertigt, insbesondere eine Trägerfolie aus Kunststoff, zum Beispiel aus Polyimid.

Gemäß einem Ausführungsbeispiel sind auf der flexible Leiterplatte des Weiteren elektrische Kontakte vorgesehen sind, insbesondere zur Verbindung mit einer elektrischen Versorgungseinheit und / oder mit einer Steuer- oder Regeleinheit und / oder mit einem elektrischen Verbraucher. Damit wird in vorteilhafter Weise die Montage des Stators oder des elektromechanischen Wandlers und die Verbindung mit der Versorgungseinheit und / oder der Steuer- oder Regeleinheit und / oder mit einem elektrischen Verbraucher erleichtert.

Gemäß einem Ausführungsbeispiel sind die elektrischen Kontakte auf einem Abschnitt der flexiblen Leiterplatte vorgesehen, der versetzt und / oder abgesetzt von einem die zumindest eine Spulenwicklung des Stators aufweisenden Hauptabschnitt ausgebildet ist. Vorzugsweise ist der Abschnitt der flexiblen Leiterplatte für die elektrischen Kontakte stirnseitig oder (in Bezug auf die Rotationsachse des Rotors) axial beabstandet (vor oder hinter) von dem Rotor und / oder von der flexiblen Leiterplatte, insbesondere von dem von der flexiblen Leiterplatte gebildeten zylindrischen Hohlkörper oder von der zumindest einen Öffnung des zylindrischen Hohlkörpers, angeordnet. Vorzugsweise ist der Abschnitt der flexiblen Leiterplatte für die elektrischen Kontakte an einer Längsseite der länglich ausgebildeten flexiblen Leiterplatte vorgesehen. Vorzugsweise ist der Abschnitt der flexiblen Leiterplatte für die elektrischen Kontakte über einen schmalen Verbindungsabschnitt oder Steg mit dem die zumindest eine Spulenwicklung des Stators aufweisenden Hauptabschnitt verbunden. Damit ist in vorteilhafter Weise eine besonders kompakte Struktur des Stators und eine platzsparende Anordnung der elektrischen Kontakte erzielbar.

Gemäß einem Ausführungsbeispiel sind auf der flexible Leiterplatte weitere mit der zumindest einen Spulenwicklung elektrisch verbundene elektrische Bauteile vorgesehen, zum Beispiel ein elektrischer Verbraucher, insbesondere eine elektromagnetische Strahlungsquelle, zum Beispiel ein optisches Halbleiterelement, ein Sensor, ein Aktor oder ein Bauteil zur Veränderung eines elektrischen Parameters, zum Beispiel ein Gleichrichter oder ein Transformator. Gemäß einem weiteren Ausführungsbeispiel weist der elektromechanische Wandler oder der Stator zumindest ein magnetisches Rückschlusselement auf, welches auf der flexiblen Leiterplatte befestigt ist. Beide Ausführungsbeispiel erhöhen die Kompaktheit und erleichtern die Montage des Stators, des elektromechanischen Wandlers oder einer Baugruppe, welche die Spulenwicklung und einen damit verbundenen elektrischen Verbraucher umfasst.

Gemäß einem Ausführungsbeispiel weist der Rotor ein Magnetelement, insbesondere einen Permanentmagneten, und eine Rotationsachse auf, wobei die flexible Leiterplatte mit der zumindest einen Spulenwicklung im Wesentlichen konzentrisch oder spiralförmig um die Rotationsachse angeordnet ist, und wobei das Magnetelement des Rotors derart angeordnet ist, dass der Magnetfluss des von dem Magnetelement erzeugten Magnetfelds radial zur oder um die Rotationsachse ausgebildet ist. Gemäß einem anderen Ausführungsbeispiel ist die flexible Leiterplatte flächig mit einer Oberseite und einer Unterseite ausgebildet ist, wobei die flexible Leiterplatte derart angeordnet ist, dass die Oberseite und die Unterseite im Wesentlichen konzentrisch oder spiralförmig um die Rotationsachse des Rotors angeordnet sind. Gemäß einem weiteren Ausführungsbeispiel bildet die zumindest eine Spulenwicklung eine Flachspule mit einer Oberseite und einer Unterseite, wobei die Flachspule derart angeordnet ist, dass die Oberseite und die Unterseite im Wesentlichen konzentrisch oder kreisbogenförmig um die Rotationsachse des Rotors angeordnet sind. Vorzugsweise erstreckt sich die Rotationsachse des Rotors parallel zu einer Längs- oder Mittelachse der medizinischen, insbesondere dentalen, Vorrichtung oder des Hand- oder Winkelstücks. Diese Ausführungsbeispiele ermöglichen eine (bezogen auf die Rotationsachse des Rotors) längliche Ausbildung des elektromechanischen Wandlers, d.h. die axiale Länge des elektromechanischen Wandlers ist zumindest gleich, vorzugsweise größer als, sein Durchmesser. Diese Ausführungsbeispiele ermöglichen somit insbesondere eine Integration des elektromechanischen Wandlers in eine längliche oder rohrförmige, medizinische, insbesondere dentale, Vorrichtung, vorzugsweise in ein Hand- oder Winkelstück oder ein damit verbindbares Anschlussteil, und schaffen vorzugsweise neben dem elektromechanischen Wandler oder parallel zu dessen Rotationsachse Platz für weitere Bauteile, zum Beispiel Fluidleitungen, Strahlungsleiter, elektrische Leitungen oder Signalleitungen.

Durch die Verwendung einer flexiblen Leiterplatte, auf welcher alle Spulenwicklungen des Stators vorgesehen ist, und zusätzlich durch die im Vorstehenden beschriebene Anordnung der flexible Leiterplatte oder deren Ober- und Unterseite und / oder der Ober- und Unterseite der Flachspule im Wesentlichen konzentrisch oder spiralförmig oder kreisbogenförmig um die Rotationsachse des Rotors ist es möglich, einen elektromechanischen Wandler mit äußerst geringen Abmessungen zu schaffen. So ist es zum Beispiel möglich, einen elektromechanischen Wandler mit einem Durchmesser von unter einem Zentimeter, vorzugsweise von etwa 6 mm zu bauen, der ausreichend Leistung liefert, um eine Leuchtdiode elektrisch zu versorgen, so dass die Leuchtdiode elektromagnetische Strahlung abgeben kann, insbesondere mit einer Spannung von etwa 2,8 V und einer Stromstärke von etwa 25 mA.

Die Erfindung wird nachfolgend anhand bevorzugter Ausführungsbeispiele und Bezug nehmend auf die beigefügten Zeichnungen erläutert. Es zeigt die:
Figur 1 ein Ausführungsbeispiel einer medizinischen, insbesondere dentalen, Vorrichtung mit einem elektromechanischen Wandler in Form eines Generators, dessen Stator eine flexible Leiterplatte mit zumindest einer Spulenwicklung aufweist.
Figur 2 ein Ausführungsbeispiel eines Generators, dessen Stator eine flexible Leiterplatte mit zumindest einer Spulenwicklung aufweist.
Figur 3 ein Ausführungsbeispiel eines Elektromotors, dessen Stator eine flexible Leiterplatte mit zumindest einer Spulenwicklung aufweist.
Figuren 4A und 4B ein Ausführungsbeispiel der Oberseite und der Unterseite einer flexiblen Leiterplatte mit mehreren Spulenwicklungen.
Figur 5 eine schematische Schnittdarstellung durch die flexible Leiterplatte der Figuren 4A und 4B.

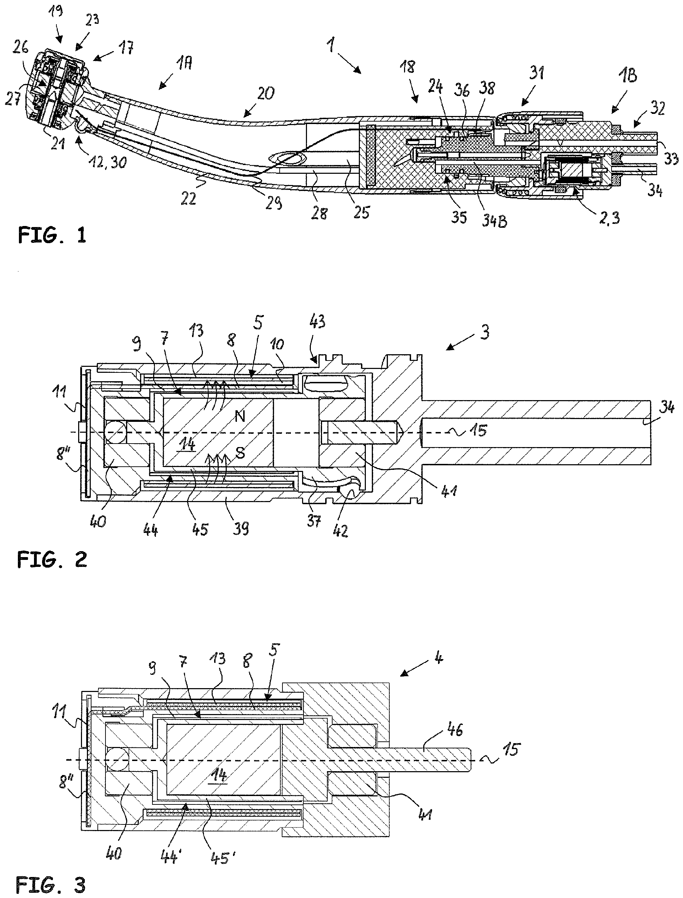

Die medizinische, insbesondere dentale, Vorrichtung 1 der Figur 1 umfasst ein Handgriffelement oder Handstück 1A und ein lösbar mit dem Handstück 1A verbindbares Anschlussteil oder Adapterteil 1B.

Das Handstück 1A weist ein erstes Ende 17 und ein zweites Ende 18 auf. Das erste Ende 17 ist als Kopfabschnitt 19 ausgebildet, an den ein länglicher Griffabschnitt 20 anschließt. Der Griffabschnitt 20 besteht aus zwei gebogen zueinander angeordnete Teilabschnitten. Eine Werkzeugöffnung 21 ist seitlich am Kopfabschnitt 19 angeordnet, so dass ein darin aufgenommenes Behandlungswerkzeug quer zum Griffabschnitt 20 in den Kopfabschnitt 19 einsetzbar ist. Eine ein- oder mehrteilige Außenhülse 22 umgibt den Griffabschnitt 20 und den Kopfabschnitt 19. Selbstverständlich kann das Handstück auch andere Außenformen aufweisen, insbesondere eine gerade oder eine pistolenförmige Gestalt.

Das zweite Ende 18 umfasst eine lösbare Kupplungs- oder Anschlussvorrichtung 24 zum Anschluss des Anschlussteils 1B und / oder an eine Steuer- und / oder Versorgungseinrichtung. Die Kupplungsvorrichtung 24 ist vorzugsweise als Drehkupplung ausgebildet, so dass das Handstück 1A und das Anschlussteil 1B relativ zueinander drehbar sind, sie kann jedoch auch als Steck-, Schraub-, oder Klemmkupplung ausgebildet sein.

Im Vorderbereich oder Kopfabschnitt 19 des Handstücks 1A befindet sich eine über die Werkzeugöffnung 21 zugängliche Werkzeugaufnahme 26. Die Werkzeugaufnahme ist zumindest teilweise in einer Hohlwelle aufgenommen, die beweglich gelagert ist, insbesondere durch zwei Kugellager. Auf der Hohlwelle ist ein erstes Laufrad 27 befestigt, das durch ein Antriebsfluid, zum Beispiel Druckluft, gemeinsam mit der Hohlwelle und der Werkzeugaufnahme 26 in eine Drehbewegung versetzbar ist. Eine Werkzeuglösevorrichtung 23 mit einem Druckknopf erleichtert die Entnahme eines in die Werkzeugaufnahme 26 einsetzbaren Werkzeugs, zum Beispiel eines rotierenden Bohrers.

Das erste Laufrad 27 im Kopfabschnitt 19 ist als Überdruckturbine ausgebildet, d.h. der im Fluid anliegende Druck wird zum Antrieb des Laufrads 27 verwendet und über das Laufrad 27 abgebaut, so dass der Druck (Fließdruck) des Antriebsfluids vor dem Laufrad 27 bzw. vor dem Auftreffen auf das Laufrad 27 höher ist als nach dem Laufrad 27. Die Versorgung des ersten Laufrads 27 mit Fluid erfolgt über eine Fluidleitung 25, die sich von der Kupplungsvorrichtung 24 durch das gesamte Handstück 1A bis zu dem Kopfabschnitt 19 erstreckt. Am kopfnahen Ende der Fluidleitung 25 tritt das Fluid als Freistrahl aus der Fluidleitung 25 aus und trifft auf das erste Laufrad 27 im Kopfabschnitt 19. Das erste Laufrad 27 ist in einer Kammer aufgenommen, aus der zumindest ein Großteil des Fluids in eine Rückluftleitung eintritt. Die Rückluftleitung umfasst entweder eine eigene Leitung, die wiederum das Handstück 1A durchsetzt, oder sie ist durch die Außenhülse 22 des Handstücks 1A gebildet.

In der Kupplungsvorrichtung 24 sind mehrere Bohrungen, Kanäle oder Leitungen zur Übernahme von Medien vorgesehen, die an eine Wasserleitung 28 im Handstück 1A und / oder an die Fluid- oder Druckluftleitung 25 verbunden sind. Die Wasserleitung 28 verläuft durch das Handstück 1A bis zum Kopfabschnitt 19, wo das Wasser mit Druckluft vermischt und über Öffnungen am Kopfabschnitt 19 abgegeben wird.

Eine im Handstück 1A vorgesehene elektrische Leitung 29 dient zur Versorgung eines elektrischen Verbrauchers 12, zum Beispiel in Form einer elektromagnetischen Strahlungsquelle 30. Die elektromagnetische Strahlungsquelle 30 umfasst bevorzugt zumindest ein optisches Halbleiterelement, insbesondere eine Leuchtdiode (LED). Die Leuchtdiode emittiert bevorzugt Strahlung mit einer Wellenlänge im Bereich von etwa 380 - 700 nm zur Beleuchtung der Präparationsstelle. Die elektromagnetische Strahlungsquelle 30 ist zum Beispiel in einer Öffnung der Außenhülse 22 oder der Außenhülse des Kopfabschnitts 19 angeordnet, sie kann jedoch auch im Inneren der Außenhülse 22 vorgesehen sein und optisch mit einem Strahlungsleiter verbunden sein, der die Strahlung von der Strahlungsquelle 30 in Richtung des Kopfabschnitts 19 leitet. Die elektromagnetische Strahlungsquelle 30 kann alternativ auch um die Werkzeugöffnung 21 angeordnet sein.

Das Anschlussteil 1B verbindet das Handstück 1A mit einem Versorgungsschlauch und / oder mit einer Steuer- und / oder Versorgungseinrichtung und / oder mit einer oder mehreren Medienquellen, so dass ein Medium oder mehrere Medien, zum Beispiel Wasser, Druckluft oder Druckgas, oder Steuersignale zwischen dem Handstück 1A und dem Versorgungsschlauch und / oder der Steuer- und / oder Versorgungseinrichtung und / oder den Medienquellen leitbar sind. Das Anschlussteil 1B weist dafür eine oder mehrere Medienleitungen auf, zum Beispiel Bohrungen, Kanäle, Leitungen oder Nuten, die jeweils die Leitungen 25, 28 im Handstück 1A mit Leitungen des Versorgungsschlauchs, der Steuer- und / oder Versorgungseinrichtung und / oder der Medienquellen verbinden. Zur Verriegelung des Anschlussteil 1B mit dem Handstück 1A ist eine lösbare Verriegelungsvorrichtung 31 mit einem oder mehreren Verriegelungselementen, die mit entsprechenden Gegenelementen des Handstücks 1A zusammenwirken, vorgesehen.

Das Anschlussteil 1B weist eine längliche Gestalt mit einem ersten Ende und einem zweiten Ende auf, wobei an einem der beiden Enden eine Anschlussvorrichtung 32 zur lösbaren Verbindung mit einem Versorgungsschlauch und / oder einer Steuer- und / oder Versorgungseinrichtung und / oder zumindest einer Medienquelle vorgesehen ist. Am anderen Ende ist eine Verbindungsvorrichtung 35 zur Verbindung des Anschlussteils 1B mit dem Handstück 1A oder dessen Kupplungsvorrichtung 24 vorgesehen.

An der Anschlussvorrichtung 32 sind zwei Fluidleitungen 33, 34 erkennbar, die sich bis zur Verbindungsvorrichtung 35 erstrecken. Die Leitung 34 fördert ein Fluid, insbesondere Druckluft, zum Handstück 1A und die Leitung 33 fördert das Fluid vom Handstück 1A weg. Alternativ kann die Anschlussvorrichtung 32 auch nur die Leitung 33 zur Förderung des Fluids zum Handstück 1A aufweisen. An der Anschlussvorrichtung 32 ist zumindest eine weitere, aufgrund der in der Figur 1 gewählten Schnittebenen nicht zu erkennende Fluidleitung, insbesondere zur Leitung von Wasser in das Handstück 1A, vorgesehen. Alle Fluidleitungen 33, 34 weisen jeweils kurze Rohrabschnitte auf, die über die Stirnfläche der Anschlussvorrichtung 32 ragen und in Bohrungen oder Kanälen des Anschlussteils 1B aufgenommen sind.

Die Verbindungsvorrichtung 35 umfasst einen stab- oder zapfenförmigen, zylindrischen Körper 36 zum Anschluss an das Handstück 1A, insbesondere zur Aufnahme in einer Kupplungsaufnahme, zum Beispiel einem Kupplungsrohr des Handstücks 1A. An der Außenmantelfläche der Verbindungsvorrichtung 35 bzw. des zylindrischen Körpers 36 münden die beiden Fluidleitungen 33, 34 sowie die Fluidleitung für das Wasser in entsprechenden Öffnungen. An der Außenmantelfläche des Kupplungszapfens 36 sind des Weiteren mehrere Ringnuten mit Dichtelementen, zum Beispiel O-Ringen, zum Abdichten der einzelnen Medienübergänge vorgesehen.

In dem Anschlussteil 1B ist des Weiteren ein elektromechanischer Wandler 2 vorgesehen, der gemäß dem Ausführungsbeispiel der Figur 1 als Generator 3 ausgebildet ist. Der Generator 3 ist mit der Fluidleitung 34 verbunden oder in dieser zumindest teilweise aufgenommen, insbesondere ist das Laufrad 37 (siehe Figur 2) des Generators 3 in der Fluidleitung 34 aufgenommen, so dass er mit einem in der Fluidleitung 34 förderbaren Fluid, insbesondere mit Druckluft, betreibbar ist. Ein Fluidleitungsabschnitt 34B leitet das Fluid nach dem Passieren des Generators 3 in den zylindrischen Körper 36. Der Generator 3 ist ausgebildet, elektrische Energie zu erzeugen, die einem elektrischen Verbraucher in dem Anschlussteil 1B und / oder in dem Handstück 1A zur Verfügung stellbar ist, zum Beispiel dem elektrischen Verbraucher 12 (Beleuchtungsvorrichtung 30) des Handstücks 1A.

Durch die Verbindung des Anschlussteil 1B mit dem Handstück 1A wird die Fluidleitung 34, 34B des Anschlussteils 1B mit der Fluidleitung 25 des Handstücks 1A sowie die Fluidleitung 33 mit der Rückluftleitung des Handstücks 1A verbunden. Das Laufrad 37 des Generators 3 sowie das Laufrad 27 des Handstücks 1A sind somit seriell oder, in Bezug auf die Fluidströmung, hintereinander angeordnet. In anderen Worten sind die beiden Laufräder 27, 37 an oder entlang einer einzigen Fluidleitung angeordnet, die in zwei voneinander trennbare bzw. miteinander verbindbare Abschnitte 25 und 34, 34B unterteilt ist. Diese einzige, gemeinsame Fluidleitung leitet das Antriebsfluid zuerst einem Laufrad, bevorzugt dem Laufrad 37 des Generators 3, und anschließend dem anderen Laufrad, bevorzugt dem Laufrad 27 des Handstücks 1A, zu.

Um einen derartigen seriellen Betrieb der beiden Laufräder 27, 37 zu ermöglichen und insbesondere eine ausreichende Leistungserzeugung oder ein ausreichendes Drehmoment beider Laufräder 27, 37 zu erhalten, ist in einem bevorzugten Ausführungsbeispiel das Laufrad 37 des Generators 3 als Überdruckturbine oder Reaktionsturbine ausgebildet, zum Beispiel als Francis- oder Kaplanturbine oder als Turbine, die diesen beiden Turbinentypen ähnelt. Als Überdruckturbine oder Reaktionsturbine werden Turbinen oder Laufräder bezeichnet, bei denen der statische Druck am Eintritt in das Laufrad größer ist als am Austritt. Besonders bevorzugt ist zusätzlich das Laufrad 27 des Handstücks 1A als Gleichdruck-, Freistrahl- oder Aktionsturbine ausgebildet, zum Beispiel als Pelton-Laufrad oder als ein einem Pelton-Laufrad ähnliches Laufrad, bei denen der statische Druck am Laufradeintritt und am Laufradaustritt gleich groß, so dass primär der dynamische Druck bzw. die kinetische Energie des Antriebsfluids das Laufrad 27 antreibt.

Gemäß der Ausführungsform nach Figur 1 ist der Generator 3 über elektrische Leitungen oder Kabel im Anschlussteil 1B mit zwei elektrischen Kontakten 38 verbunden, die an der dem Handstück 1A zugewandten Verbindungsvorrichtung 35 angeordnet sind. Zwecks einfacher Herstellung verlaufen die elektrischen Leitungen oder Kabel zumindest teilweise in Fluidleitungen, zum Beispiel den Leitungen 33, 34. Bevorzugt sind die beiden Kontakte 38 als Kontaktringe ausgebildet, die den Kupplungszapfen 36 an seiner Mantelfläche umgeben und Teil von Schleifkontakten sind. Dem entsprechend sind am Handstück 1A elektrische Gegenkontakte vorgesehen, die die elektrischen Kontakte 38 kontaktieren, so dass der vom Generator 3 erzeugte Strom einem oder mehreren elektrischen Verbrauchern 30 im oder am Handstück 1A zugeführt werden kann, zum Beispiel der Beleuchtungsvorrichtung 30, die bevorzugt zumindest eine Leuchtdiode umfasst, einem Laserlichtgenerator oder einer Steuer- oder Regelvorrichtung.

Die im Vorstehenden beschriebene medizinische, insbesondere dentale, Vorrichtung 1 der Figur 1 stellt ausdrücklich nur eine mögliche Ausführungsform dar. Selbstverständlich kann gemäß anderen, bevorzugten Ausführungsbeispielen (1) der elektromechanische Wandler 3 in dem Handstück 1A angeordnet sein, insbesondere in einem an die Kupplungsvorrichtung 24 anschließenden Teil des Griffabschnitts 20; oder (2) der elektrische Verbraucher 30 in oder an dem Anschlussteil 1B vorgesehen sein, insbesondere an dem Kupplungszapfen 36; oder (3) anstelle des fluidbetriebenen Handstücks 1A ein motorisch betreibbares Handstück oder ein damit verbindbares Anschlussteil mit dem Generator versehen sein, wobei der Rotor des Generators vorzugsweise von einer Welle antreibbar ist, welche die Antriebsbewegung des motorischen Antriebs auf das mit dem motorisch betreibbaren Handstück verbundene Werkzeug überträgt.

Die Figur 2 zeigt einen als Generator 3 ausgebildeten elektromechanischen Wandler 2, der zum Beispiel in dem Anschlussteil 1B der Figur 1 aufgenommen sein kann. Der Generator 3 umfasst einen Rotor 7 und einen Stator 5. Der Generator 3 oder zumindest dessen Laufrad 37, ist in einer Hülse 39 aufgenommen oder weist an seinem Außenumfang eine Hülse 39 auf. Die Hülse 39 schließt an die Fluidleitung 34 an oder ist als Teil der Fluidleitung 34, insbesondere mit einem größeren Innendurchmesser, ausgebildet. An der Hülse 39 sind eine oder mehrere Bohrungen, Kanäle 42, Öffnungen 43 und / oder Leitabschnitte vorgesehen, die ausgebildet sind, das in der Fluidleitung 34 fließende Fluid zum dem oder in Richtung des Laufrads 37 zu lenken und nach dem Passieren des Laufrads 37 das Fluid von dem Laufrad 37 und / oder an die Außenseite der Hülse 39 zu lenken.

Der Rotor 7 umfasst ein Magnetelement 14 und ein Verbindungselement 44, welches das Magnetelement 14 mit dem Laufrad 37 verbindet. Das Verbindungselement 44 umfasst zum Beispiel eine drehbare Welle oder eine drehbare Hülse 45, in welcher das Magnetelement 14 aufgenommen ist. Die Hülse 45 ist zum Beispiel als magnetisch nicht leitende metallische Hülse oder als Kunststoffhülse ausgebildet. Vorzugsweise ist das Laufrad 37 als integraler oder unlösbar verbundener Teil der Hülse 45 ausgebildet, insbesondere an der von dem Magnetelement 14 abgewandten Außenseite der Hülse 45. Zwei Lager 40, 41 lagern den Rotor 7 des Generators 3 drehbar.

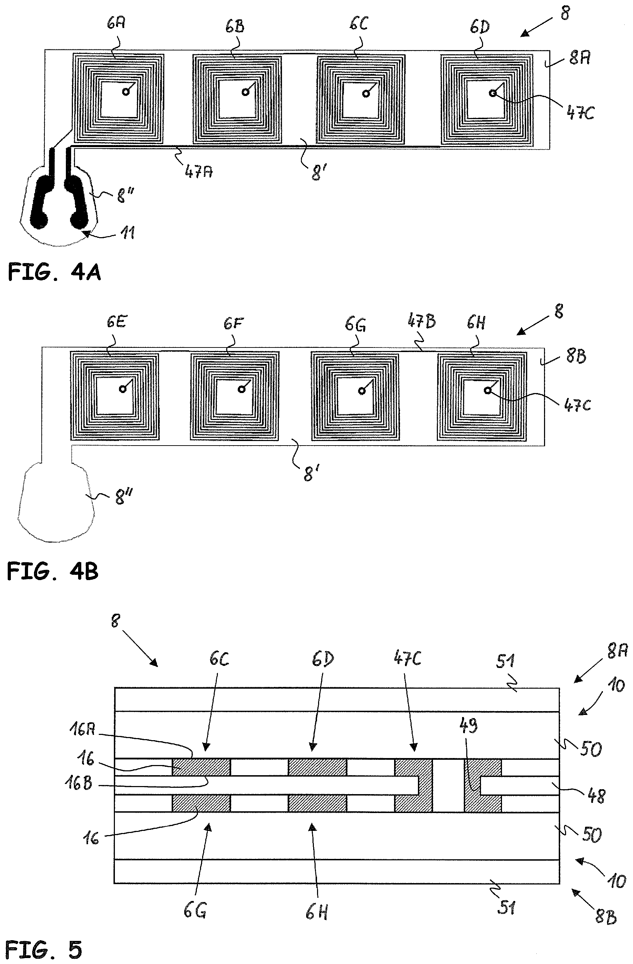

Der Stator 5 umfasst eine flexible Leiterplatte 8 mit zumindest einer Spulenwicklung 6A - 6H (siehe Figuren 4A, 4B) und zumindest ein magnetisches Rückschlusselement 13 zum Bündel oder Lenken der magnetischen Feldlinien des Magnetelements 14. Das Rückschlusselement 13 ist auf der oder angrenzend an die flexible Leiterplatte 8 angeordnet. Die flexible Leiterplatte 8 ist derart gebogen oder gerollt, dass sie einen im Wesentlichen zylindrischen Hohlraum 9 formt. In dem Hohlraum 9 ist zumindest ein Teil des Rotors 7, insbesondere das Magnetelement 14, aufgenommen. Die flexible Leiterplatte 8 ist insbesondere derart gebogen oder gerollt, dass im Querschnitt mehrere Lagen der flexiblen Leiterplatte 8 gebildet sind, die schichtweise übereinander angeordnet sind. Damit sind vorzugsweise auch mehrere Spulenwicklungen 6A - 6H schichtweise übereinander angeordnet. Eine Deckschicht 10 umhüllt die Spulenwicklungen 6A - 6H und / oder die flexible Leiterplatte 8 und schützt sie vor externen Einflüssen.

Zum Ableiten der von dem Generator 3 erzeugten elektrischen Energie sind elektrische Kontakte 11, zum Beispiel Kupferkontakte, vorgesehen. Die elektrischen Kontakte 11 sind auf einem Abschnitt 8" der flexiblen Leiterplatte 8 vorgesehen, der versetzt und / oder abgesetzt von einem die zumindest eine Spulenwicklung 6A - 6H aufweisenden Hauptabschnitt 8' ausgebildet ist. Der Abschnitt 8" und / oder die darauf angeordneten elektrischen Kontakte 11 ist / sind in Bezug auf die Rotationsachse 15 des Rotors 7 axial von dem Rotor 7 oder von dem Magnetelement 14 des Rotors 7 beabstandet. Der Abschnitt 8" und / oder die darauf angeordneten elektrischen Kontakte 11 ist / sind insbesondere an einem Ende des elektromechanischen Wandlers vorgesehen oder bilden dessen Ende.

Die flexible Leiterplatte 8 mit den Spulenwicklung 6A - 6H ist im Wesentlichen konzentrisch oder spiralförmig um die Rotationsachse 15 des Rotors 7 angeordnet. Das gemäß der Figur 2 zweipolige Magnetelement 14 des Rotors 7 ist derart angeordnet, dass der Magnetfluss (in der Figur 2 durch die von dem Magnetelement 14 weg- und eingehenden Pfeile dargestellt) des von dem Magnetelement 14 erzeugten Magnetfelds radial zur oder um die Rotationsachse 15 ausgebildet ist.

Die Figur 3 (nicht beansprucht) zeigt einen als Elektromotor 4 ausgebildeten elektromechanischen Wandler 2, der zum Beispiel in einem Handstück oder in einer Motor- oder Antriebseinheit, die als an ein Handstück anschließbares Anschlussteil ausgebildet ist, aufgenommen ist. Der Aufbau des Elektromotors 4 ähnelt in vielen Merkmalen dem Aufbau des Generators 3 der Figur 2, so dass gleiche Bauteile mit denselben Bezugszeichen versehen sind. Der Rotor 7 mit dem Magnetelement 14, der Stator 5 mit der flexible Leiterplatte 8, die derart gebogen oder gerollt ist, dass sie einen im Wesentlichen zylindrischen Hohlraum 9 formt, mit den darauf vorgesehenen Spulenwicklungen 6A - 6H und mit dem magnetischen Rückschlusselement 13, die Lager 40, 41 sowie der Abschnitt 8" der flexiblen Leiterplatte 8 mit den elektrischen Kontakten 11 sind in Aufbau und Anordnung gleich den jeweiligen Bauteilen des Generators der Figur 2, so dass die in Zusammenhang mit der Figur 2 beschriebenen Merkmale dieser Bauteile in gleicher Weise auf die Bauteile der Figur 3 zutreffen. Das Magnetelement 14 der Figur 3 kann zwei- oder mehrpolig ausgebildet sein. Die Verwendung der elektrischen Kontakte 11 des Motors 4 der Figur 3 unterscheidet sich von der Verwendung der elektrischen Kontakte 11 des Generators 3 der Figur 2 klarerweise darin, dass über die elektrischen Kontakte 11 der Figur 3 eine Verbindung zu einer elektrischen Energiequelle und / oder einer Regel- oder Steuereinheit herstellbar ist, so dass dem Elektromotor 4 oder den auf der flexiblen Leiterplatte 8 vorgesehenen Spulenwicklungen 6A - 6H über die elektrischen Kontakte 11 der Figur 3 elektrische Energie zuführbar und damit der Rotor 7 oder das Magnetelement 14 in bekannter Weise um die Rotationsachse 15 in Drehung versetzbar ist.

Der Elektromotor 4 umfasst des Weiteren eine Motorwelle 46, die mit dem Magnetelement 14 verbunden ist, zum Beispiel durch ein Verbindungselement 44', insbesondere eine Hülse 45', in welcher das Magnetelement 14 aufgenommen ist. Die Motorwelle 46 ist ausgebildet, die Drehbewegung des Rotors 7 auf ein mit dem Elektromotor 4 verbundenes Instrument oder Werkzeug zu übertragen.

Anstelle einen Generator mit einem Fluid anzutreiben, so wie dies in Zusammenhang mit der Figur 2 beschrieben ist, ist es selbstverständlich auch möglich, einen Generator zu schaffen, dessen Rotor mechanisch, über eine Antriebswelle antreibbar ist. Der grundsätzliche Aufbau eines derartigen, mechanisch angetriebenen Generators ist im Wesentlichen ident mit dem in der Figur 3 schematisch dargestellten Aufbau des Elektromotors 4. Die Figur 3 zeigt somit schematisch auch einen mechanisch angetriebenen Generator, wobei die Welle 46 zur Übertragung einer Antriebsbewegung auf den Rotor 7 ausgebildet ist. Die elektrischen Kontakte 11 sind wiederum zum Ableiten der von dem Generator erzeugten elektrischen Energie und / oder zur Verbindung mit einem elektrischen Verbraucher vorgesehen. Zusätzlich kann an dem mechanisch angetriebenen Generator noch eine weitere Welle vorgesehen sein, zum Beispiel an dem Ende des Rotors 7, das dem Ende mit der Welle 46 gegenüber liegt, so dass die von der Welle 46 übertragene Antriebsbewegung über den Rotor 7 weiter leitbar ist, zum Beispiel auf ein mit dem Generator verbundenes Instrument oder Werkzeug.

Die Figuren 4A und 4B zeigen die Oberseite 8A (siehe Fig. 4A) und die Unterseite 8B (siehe Fig. 4B) einer flexiblen Leiterplatte 8 mit jeweils mehreren Spulenwicklungen 6A - 6H, wie sie zum Beispiel in die in den Figuren 1 - 3 dargestellten elektromechanischen Wandler 2, 3, 4 eingebaut ist. Die flexible Leiterplatte 8 ist in den beiden Figuren 4A, 4B zwecks besseren Verständnisses in ausgestrecktem, planem Zustand dargestellt, sie ist jedoch aufgrund ihrer Flexibilität oder Biegsamkeit biegbar oder rollbar und derart gebogen oder gerollt in die elektromechanischen Wandler 2, 3, 4 einbaubar. Vorzugsweise ist die flexible Leiterplatte 8 entlang ihrer Schmalseite, d.h. gemäß den Figuren 4A, 4B zum Beispiel von rechts nach links, einrollbar oder eingerollt. Vorzugsweise ist die flexible Leiterplatte 8 derart einrollbar oder eingerollt, dass unterschiedliche Spulenwicklungen 6A - 6H im Querschnitt durch die eingerollte Leiterplatte 8 in mehreren Schichten übereinander angeordnet sind.

Die flexible Leiterplatte 8 umfasst einen Hauptabschnitt 8' auf dem die, vorzugsweise in Reihe angeordneten, Spulenwicklungen 6A - 6H vorgesehen sind. Der Hauptabschnitt 8' ist vorzugweise länglich ausgebildet, insbesondere streifenförmig. Bevorzugt ist die Breite der flexiblen Leiterplatte 8 oder des Hauptabschnitts 8' in etwa gleich oder nur gering größer als die Breite einer darauf angeordneten Spulenwicklungen 6A - 6H. An einem Ende der flexiblen Leiterplatte 8 oder des Hauptabschnitts 8' weist die flexible Leiterplatte 8 einen Abschnitt 8" auf, der versetzt und / oder durch einen Steg abgesetzt von dem Hauptabschnitt 8' ausgebildet ist. Auf diesem Abschnitt 8" sind die elektrischen Kontakte 11 angeordnet.

Die Spulenwicklungen 6A - 6H sind vorzugsweise als Flachwicklungen oder Flachspulen 16 mit einer Oberseite 16A und einer Unterseite 16B ausgebildet (siehe Figur 5). Gemäß den Figuren 4A, 4B ist die flexible Leiterplatte 8 beidseitig mit den Spulenwicklungen 6A - 6H versehen. Alternativ ist es jedoch auch möglich, nur eine Seite der flexiblen Leiterplatte 8, wahlweise die Oberseite 8A oder die Unterseite 8B, mit Spulenwicklungen 6A - 6H zu versehen. Die Spulenwicklungen 6A - 6H sind zum Beispiel als Schleifen-, Wellen oder Rautenwicklungen ausgebildet.

Die Spulenwicklungen 6A - 6H sind über auf der flexiblen Leiterplatte 8 vorgesehene elektrische Leitungsabschnitte miteinander und mit den elektrischen Kontakten 11 verbunden, beispielhaft sind einige dieser Leitungsabschnitte mit den Bezugszeichen 47A, 47B, 47C bezeichnet. Die elektrischen Leitungsabschnitte 47A, 47B, 47C sind entweder an der Oberseite 8A oder der Unterseite 8B der flexiblen Leiterplatte 8 vorgesehen oder sie durchsetzen die flexible Leiterplatte 8, um eine an der Oberseite 8A vorgesehene Spulenwicklung 6A- 6D mit einer an der Unterseite 8B vorgesehenen Spulenwicklung 6E- 6H zu verbinden. Beispielhaft verbindet der elektrische Leitungsabschnitt 47A einen der elektrische Kontakte 11 mit der Spulenwicklung 6D, der Leitungsabschnitt 47B die beiden Spulenwicklungen oder Flachspulen 6H und 6G miteinander und der Leitungsabschnitt 47C verbindet die Spulenwicklung 6D an der Oberseite 8A und die Spulenwicklung 6H an der Unterseite 8A der flexiblen Leiterplatte 8. Die Spulenwicklungen 6A - 6H sind elektrisch in Reihe geschaltet, wobei gemäß den Figuren 4A, 4B die Schaltung zum Beispiel wie folgt aufgebaut ist: Einer der beiden elektrischen Kontakte 11 ist über den Leitungsabschnitte 47A mit der Spulenwicklung 6D verbunden, diese über den Leitungsabschnitte 47C mit der Spulenwicklung 6H, diese über den Leitungsabschnitte 47B mit der Spulenwicklung 6G, diese mit der Spulenwicklung 6C, diese mit der Spulenwicklung 6B, diese mit der Spulenwicklung 6F, diese mit der Spulenwicklung 6E, diese mit der Spulenwicklung 6A und diese mit dem zweiten elektrischen Kontakt 11.

Die Figur 5 zeigt eine schematische Schnittdarstellung durch die flexible Leiterplatte 8 im Bereich der Spulenwicklungen 6C, 6D, 6G, 6H und des elektrischen Leitungsabschnitts 47C. Die flexible Leiterplatte 8 umfasst ein flexibles Basis- oder Trägermaterial 48, vorzugsweise aus Kunststoff gebildet, zum Beispiel aus Polyimid. Auf dem Trägermaterial 48 sind die Spulenwicklungen 6C, 6D, 6G, 6H und die elektrischen Leitungsabschnitte 47A, 47B, 47C angeordnet, die zum Beispiel als eine metallische Schicht, insbesondere als eine Kupfer aufweisende Schicht, auf dem Trägermaterial 48 aufgetragen sind. Der Leitungsabschnitt 47C durchsetzt des Weiteren eine Bohrung oder Öffnung 49 in dem Trägermaterial 48. Auf dem Trägermaterial 48 und / oder auf den Spulenwicklungen 6C, 6D, 6G, 6H und / oder auf den elektrischen Leitungsabschnitten 47A, 47B, 47C ist vorzugsweise eine, insbesondere biegsame oder flexible, Deckschicht 10 zum Schutz vor externen Einflüssen vorgesehen. Die Deckschicht 10 umfasst eine oder mehrere Schichtabschnitte, zum Beispiel ein Adhesiv 50, insbesondere ein Epoxid, und / oder eine Oberschicht 51, zum Beispiel einen Kunststoff, insbesondere ein Polyimid. Wenn die flexible Leiterplatte 8 nur an einer Seite 8A, 8B mit Spulenwicklungen 6A - 6E versehen ist und keine die Leiterplatte 8 durchsetzenden elektrischen Leitungsabschnitte 47C vorgesehen sind, dann ist es ausreichend, die Deckschicht 10 nur an jener Seite 8A, 8B aufzubringen, auf der die Spulenwicklungen 6A - 6E angeordnet sind.

Die Erfindung ist nicht auf die beschriebenen Ausführungsbeispiele beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Medizinische, insbesondere dentale, Vorrichtung (1) mit einem elektromechanischen Wandler (2) in Form eines Generators (3), wobei der elektromechanische Wandler (2) umfasst: Einen Stator (5) mit mehreren elektrisch leitenden Spulenwicklungen (6A - 6H) und einen bewegbar zum Stator (5) ausgebildeten Rotor (7), **dadurch gekennzeichnet, dass**
alle Spulenwicklungen (6A - 6H) des Stators (5) auf einer einzigen flexiblen Leiterplatte (8) vorgesehen sind und dass die flexible Leiterplatte (8) flächig mit einer Oberseite (8A) und einer Unterseite (8B) ausgebildet ist, wobei die flexible Leiterplatte (8) derart angeordnet ist, dass die Oberseite (8A) und die Unterseite (8B) im Wesentlichen spiralförmig um die Rotationsachse (15) des Rotors (7) angeordnet sind.

2. Medizinische, insbesondere dentale, Vorrichtung (1) nach Anspruch 1, **dadurch gekennzeichnet, dass**
die flexible Leiterplatte (8) derart gebogen ist, insbesondere in Form eines im Wesentlichen zylindrischen Hohlkörpers, dass sie einen Hohlraum (9) bildet.

3. Medizinische, insbesondere dentale, Vorrichtung (1) nach Anspruch 2, **dadurch gekennzeichnet, dass**
die flexible Leiterplatte (8) derart gebogen ist, dass mehrere Spulenwicklungen (6A - 6H) schichtweise übereinander angeordnet sind.

4. Medizinische, insbesondere dentale, Vorrichtung (1) nach Anspruch 2 oder 3, **dadurch gekennzeichnet, dass**
zumindest ein Teil des Rotors (7) in dem Hohlraum (9) aufgenommen ist.

5. Medizinische, insbesondere dentale, Vorrichtung (1) nach einem der vorstehenden Ansprüche, **dadurch gekennzeichnet, dass**
die Spulenwicklungen (6A - 6H) Flachspulen (16) bilden.

6. Medizinische, insbesondere dentale, Vorrichtung (1) nach einem der vorstehenden Ansprüche, **dadurch gekennzeichnet, dass**
jeweils zumindest eine Spulenwicklung (6A - 6H) oder Flachspule an der Oberseite (8A) und an der Unterseite (8B) vorgesehen ist.

7. Medizinische, insbesondere dentale, Vorrichtung (1) nach einem der vorstehenden Ansprüche, **dadurch gekennzeichnet, dass**
die flexible Leiterplatte (8) als länglicher Streifen ausgebildet ist, auf dem mehrere Spulenwicklungen (6A - 6H) in einer Reihe angeordnet sind.

8. Medizinische, insbesondere dentale, Vorrichtung (1) nach einem der vorstehenden Ansprüche, **dadurch gekennzeichnet, dass**
die Spulenwicklungen (6A - 6H) vollständig in der flexiblen Leiterplatte (8) eingeschlossen sind oder durch eine an der flexiblen Leiterplatte (8) vorgesehene oder an die flexiblen Leiterplatte (8) angrenzende Deckschicht (10) bedeckt sind.

9. Medizinische, insbesondere dentale, Vorrichtung (1) nach einem der vorstehenden Ansprüche, **dadurch gekennzeichnet, dass**
alle Spulenwicklungen (6A - 6H) des Stators (5) über auf der einzigen flexiblen Leiterplatte (8) vorgesehene elektrische Leitungsabschnitte miteinander und mit zwei elektrischen Kontakten (11) zur Verbindung mit einem elektrischen Verbraucher (12) verbunden sind.

10. Medizinische, insbesondere dentale, Vorrichtung (1) nach Anspruch 9, **dadurch gekennzeichnet, dass**
die elektrischen Kontakte (11) auf der flexible Leiterplatte (8) vorgesehen sind.

11. Medizinische, insbesondere dentale, Vorrichtung (1) nach Anspruch 9, **dadurch gekennzeichnet, dass**
die elektrischen Kontakte (11) auf einem Abschnitt (8") der flexiblen Leiterplatte (8) vorgesehen sind, der versetzt und / oder abgesetzt von einem die Spulenwicklungen (6A - 6H) des Stators (5) aufweisenden Hauptabschnitt (8') ausgebildet ist.

12. Medizinische, insbesondere dentale, Vorrichtung (1) nach einem der vorstehenden Ansprüche, **dadurch gekennzeichnet, dass**
auf der flexible Leiterplatte (8) weitere mit den Spulenwicklungen (6A - 6H) elektrisch verbundene elektrische Bauteile vorgesehen sind, zum Beispiel ein elektrischer Verbraucher (12), insbesondere eine elektromagnetische Strahlungsquelle, ein Sensor, ein Aktor oder ein Bauteil zur Veränderung eines elektrischen Parameters, zum Beispiel ein Gleichrichter oder ein Transformator.

13. Medizinische, insbesondere dentale, Vorrichtung (1) nach einem der vorstehenden Ansprüche, **dadurch gekennzeichnet, dass**
der elektromechanische Wandler (2) zumindest ein magnetisches Rückschlusselement (13) aufweist, welches auf der flexiblen Leiterplatte (8) befestigt ist.

14. Medizinische, insbesondere dentale, Vorrichtung (1) nach einem der vorstehenden Ansprüche, **dadurch gekennzeichnet, dass**
der Rotor (7) ein Magnetelement (14) und eine Rotationsachse (15) aufweist, wobei die flexible Leiterplatte (8) mit den Spulenwicklungen (6A - 6H) im Wesentlichen konzentrisch um die Rotationsachse (15) angeordnet ist, und wobei das Magnetelement (14) des Rotors (7) derart angeordnet ist, dass der Magnetfluss des von dem Magnetelement (14) erzeugten Magnetfelds radial zur oder um die Rotationsachse (15) ausgebildet ist.

## Claims

1. A medical, in particular dental, device (1) having an electromechanical converter (2) in the form of a generator (3), wherein the electromechanical converter (2) comprises: a stator (5) having a plurality of electrically conductive coil windings (6A - 6H) and a rotor (7) designed to be movable relative to the stator (5), **characterized in that**
all the coil windings (6A - 6H) of the stator (5) are provided on a single flexible circuit board (8) and that the flexible circuit board (8) is designed to be laminar with a top side (8A) and a bottom side (8B), wherein the flexible circuit board (8) is disposed in such a way that the top side (8A) and the bottom side (8B) are disposed essentially in a spiral around the axis of rotation (15) of the rotor (7).

2. The medical, in particular dental, device (1) according to claim 1, **characterized in that**
the flexible circuit board (8) is curved such, in particular in the form of an essentially cylindrical hollow body, that it forms a cavity (9).

3. The medical, in particular dental, device (1) according to claim 2, **characterized in that**
the flexible circuit board (8) is curved in such a way that several coil windings (6A - 6H) are disposed in layers one above the other.

4. The medical, in particular dental, device (1) according to claim 2 or 3, **characterized in that**
at least a portion of the rotor (7) is accommodated in the cavity (9).

5. The medical, in particular dental, device (1) according to any one of the preceding claims, **characterized in that**
the coil windings (6A - 6H) form flat coils (16).

6. The medical, in particular dental, device (1) according to any one of the preceding claims, **characterized in that**
at least one coil winding (6A - 6H) or flat coil is provided on each of the top side (8A) and of the bottom side (8B).

7. The medical, in particular dental, device (1) according to any one of the preceding claims, **characterized in that**
the flexible circuit board (8) is designed as an elongated strip on which a plurality of coil windings (6A - 6H) are disposed in a row.

8. The medical, in particular dental, device (1) according to any one of the preceding claims, **characterized in that**
the coil windings (6A - 6H) are enclosed completely in the flexible circuit board (8) or are covered by a cover layer (10) provided on the flexible circuit board (8) or adjacent to the flexible circuit board (8).

9. The medical, in particular dental, device (1) according to any one of the preceding claims, **characterized in that**
all the coil windings (6A - 6H) of the stator (5) are connected to one another and to two electrical contacts (11) for connection to an electrical consumer (12) by electrical line segments provided on the single flexible circuit board (8).

10. The medical, in particular dental, device (1) according to claim 9, **characterized in that**
the electrical contacts (11) are provided on the flexible circuit board (8).

11. The medical, in particular dental, device (1) according to claim 9, **characterized in that**
the electrical contacts (11) are provided on a segment (8") of the flexible circuit board (8) which is offset and/or shifted from a main segment (8') having the coil windings (6A - 6H) of the stator (5).

12. The medical, in particular dental, device (1) according to any one of the preceding claims, **characterized in that**
additional electrical components which are electrically connected to the coil windings (6A - 6H) are provided on the flexible circuit board (8), for example, an electrical consumer (12), in particular an electromagnetic radiation source, a sensor, an actuator or a component for altering an electrical parameter, for example, a rectifier or a transformer.

13. The medical, in particular dental, device (1) according to any one of the preceding claims, **characterized in that**
the electromechanical converter (2) comprises at least one magnetic back iron element (13) which is attached to the flexible circuit board (8).

14. The medical, in particular dental, device (1) according to any one of the preceding claims, **characterized in that**
the rotor (7) comprises a magnetic element (14) and an axis of rotation (15), wherein the flexible circuit board (8) with the coil windings (6A - 6H) is disposed essentially concentrically around the axis of rotation (15) and wherein the magnetic element (14) of the rotor (7) is disposed in such a way that the magnetic flux of the magnetic field generated by the magnetic element (14) is formed radially to or around the axis of rotation (15).

## Revendications

1. Dispositif médical (1), en particulier dentaire, avec un convertisseur électromagnétique (2) sous la forme d'un générateur (3), dans lequel le convertisseur électromagnétique (2) comprend: un stator avec plusieurs enroulements de bobine électro-conducteurs (6A - 6H) et un rotor (7) réalisé de façon mobile par rapport au stator (5), **caractérisé en ce**
**que** tous les enroulements de bobine (6A - 6H) du stator (5) sont prévus sur une seule plaque de circuit flexible (8) et que la plaque de circuit flexible (8) est réalisée en nappe avec un dessus (8A) et un dessous (8B), dans lequel la plaque de circuit flexible (8) est disposée de manière à ce que le dessus (8A) et le dessous (8B) sont sensiblement disposés en forme de spirale autour de l'axe de rotation (15) du rotor (7).

2. Dispositif médical (1), en particulier dentaire selon la revendication 1, **caractérisé en ce**
**que** la plaque de circuit flexible (8) est courbée, en particulier en forme d'un corps creux sensiblement cylindrique, de manière à ce qu'elle forme un espace creux (9).

3. Dispositif médical (1), en particulier dentaire selon la revendication 2, **caractérisé en ce**
**que** la plaque de circuit flexible (8) est courbée de manière à ce que plusieurs enroulements de bobine (6A - 6H) sont disposés par couches les uns au-dessus des autres.

4. Dispositif médical (1), en particulier dentaire selon la revendication 2 ou 3, **caractérisé en ce**
**qu'**au moins une partie du rotor (7) est réceptionnée dans l'espace creux (9).

5. Dispositif médical (1), en particulier dentaire selon l'une des revendications précédentes, **caractérisé en ce**
**que** les enroulements de bobine (6A - 6H) forment des bobines plates (16).

6. Dispositif médical (1), en particulier dentaire selon l'une des revendications précédentes, **caractérisé en ce**
**que** au moins un enroulement de bobine (6A - 6H) ou une bobine plate est prévu(e) respectivement sur le dessus (8A) et sur le dessous (8B).

7. Dispositif médical (1), en particulier dentaire selon l'une des revendications précédentes, **caractérisé en ce**
**que** la plaque de circuit flexible (8) est réalisée en tant que bande allongée sur laquelle plusieurs enroulements de bobine (6A - 6H) sont disposés en une rangée.

8. Dispositif médical (1), en particulier dentaire selon l'une des revendications précédentes, **caractérisé en ce**
**que** les enroulements de bobine (6A - 6H) sont complètements enfermés dans la plaque de circuit flexible (8) ou sont recouverts par une couche de recouvrement (10) prévue sur la plaque de circuit flexible (8) ou adjacente à la plaque de circuit flexible (8).

9. Dispositif médical (1), en particulier dentaire selon l'une des revendications précédentes, **caractérisé en ce**
**que** tous les enroulements de bobine (6A - 6H) du stator (5) sont reliés les uns aux autres et à deux contacts électriques (11) pour la connexion à un consommateur électrique (12) via des tronçons de lignes électriques prévus sur l'unique plaque de circuit flexible (8).

10. Dispositif médical (1), en particulier dentaire selon la revendication 9, **caractérisé en ce**
**que** les contacts électriques (11) sont prévus sur la plaque de circuit flexible (8).

11. Dispositif médical (1), en particulier dentaire selon la revendication 9, **caractérisé en ce**
**que** les contacts électriques (11) sont prévus sur un segment (8") de la plaque de circuit flexible (8) qui est réalisé de façon décalée et/ou désaxée par rapport à un segment principal (8') présentant les enroulements de bobine (6A - 6H) du stator (5).

12. Dispositif médical (1), en particulier dentaire selon l'une des revendications précédentes, **caractérisé en ce**
**que** l'on prévoit, sur la plaque de circuit flexible (8), d'autres composants électriques connectés électriquement aux enroulements de bobine (6A - 6H), par exemple un consommateur électrique (12), en particulier une source de rayonnement électromagnétique, un capteur, un actionneur ou un composant pour la modification d'un paramètre électrique, par exemple un redresseur ou un transformateur.

13. Dispositif médical (1), en particulier dentaire selon l'une des revendications précédentes, **caractérisé en ce**
**que** le convertisseur électromagnétique (2) présente au moins un élément de culasse magnétique (13), lequel est fixé sur la plaque de circuit flexible (8).

14. Dispositif médical (1), en particulier dentaire selon l'une des revendications précédentes, **caractérisé en ce**
**que** le rotor (7) présente un élément magnétique (14) et un axe de rotation (15), dans lequel la plaque de circuit flexible (8) avec les enroulements de bobine (6A - 6H) est disposée sensiblement de façon concentrique autour de l'axe de rotation (15), et dans lequel l'élément magnétique (14) du rotor (7) est disposé de manière à ce que le flux magnétique du champ magnétique généré par l'élément magnétique (14) est réalisé radialement par rapport à l'axe de rotation (15) ou autour de celui-ci.
